(19) Europäisches Patentamt
European Patent Office
Office européen des brevets

(11) EP 3 337 241 A1

(12) EUROPEAN PATENT APPLICATION
published in accordance with Art. 153(4) EPC

(43) Date of publication:
20.06.2018 Bulletin 2018/25

(51) Int Cl.:
H04W 40/02 (2009.01)

(21) Application number: 16834576.7

(22) Date of filing: 29.07.2016

(86) International application number:
PCT/CN2016/092366

(87) International publication number:
WO 2017/024952 (16.02.2017 Gazette 2017/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 10.08.2015 CN 201510486079

(71) Applicant: ZTE Corporation
Shenzhen, Guangdong 518057 (CN)

(72) Inventors:
• XIE, Jiarui
Shenzhen, Guangdong 518057 (CN)
• WANG, Yafeng
Shenzhen, Guangdong 518057 (CN)
• CHEN, Lin
Shenzhen, Guangdong 518057 (CN)
• DAI, Bo
Shenzhen, Guangdong 518057 (CN)
• WU, Shuanshuan
Shenzhen, Guangdong 518057 (CN)

(74) Representative: Lavoix
Bayerstrasse 83
80335 München (DE)

(54) METHOD AND APPARATUS FOR SEARCHING FOR ROUTE OF DEVICE-TO-DEVICE WIRELESS MESH NETWORK

(57) A method and apparatus for searching for a route of a device-to-device wireless mesh network. The method comprises: a terminal sending a route searching request to a base station; and the terminal receiving route information which is determined by the base station for the terminal according to an identity identification of an adjacent node of the terminal and power information about the adjacent node.

A UE sends a route searching request to a base station — 101

The UE receives route information determined by the base station for the UE according to an identity of an adjacent node of the UE and power information about the adjacent node — 102

FIG. 1

EP 3 337 241 A1

**Description**

**TECHNICAL FIELD**

The disclosure relates to, but not limited to the technical field of mobile communications, and in particular to a route searching method and apparatus for a Device to Device (D2D) wireless mesh network.

**BACKGROUND**

As a cellular wireless network such as Long Term Evolution (LTE)/LTE-Advanced develops widely, a D2D communication draws more attention.

The D2D communication is a novel technology for controlling, by a cellular system, different UEs to directly communicate by reusing cell frequency resources. Because the D2D communication has the characteristic of short distance communication and a direct communication mode, a D2D communication technology may effectively save system resources, thereby improving the spectrum efficiency of a system.

However, because the D2D communication is a short distance communication, two devices cannot communicate after the distance therebetween is beyond a certain range, thereby seriously influencing the reliability of communication. In order to increase a D2D communication distance, two devices distant from each other can communicate with each other by means of a technology of combining D2D and a wireless Mesh network and via the characteristic of a multi-hop Mesh network.

At present, the Mesh network usually adopts spectrum resources of an unlicensed band, and has a relatively long communication distance. Regarding routing in a Mesh network, only the distance instead of channel capacity and device mobility is usually taken into consideration.

**SUMMARY**

The following is a brief introduction of the subject matter described herein in detail. The brief introduction is not intended to restrict the scope of protection of claims.

Embodiments of the disclosure provide a route searching method and apparatus for a D2D Mesh network, capable of improving the stability of a route.

An embodiment of the disclosure provides the technical solution as follows.

There is provided a route searching method for a D2D wireless Mesh network, including:

a UE sends a route searching request to a base station; and

the UE receives route information determined by the base station for the UE according to an identity of an adjacent node of the UE and power information about the adjacent node.

In an embodiment, the route searching method may further include:
the UE acquires the identity of the adjacent node of the UE and the power information about the adjacent node, and sends the identity of the adjacent node and the power information about the adjacent node to the base station.

In an embodiment, the step that the UE acquires the identity of the adjacent node of the UE and the power information about the adjacent node may include:
the UE receives a device discovery message sent by the adjacent node, wherein the device discovery message includes the identity of the adjacent node and the power information about the adjacent node.

In an embodiment, the step that the UE acquires the identity of the adjacent node of the UE and the power information about the adjacent node may further include:

the UE determines, according to the identity of the adjacent node, whether the adjacent node is in management information, recorded by the UE, about the adjacent node; and

if the adjacent node is in the management information, recorded by the UE, about the adjacent node, the UE updates the power information about the adjacent node in the management information about the adjacent node according to the power information about the adjacent node in the device discovery message; and if the adjacent node is not in the management information, recorded by the UE, about the adjacent node, the UE stores the identity of the adjacent node and the power information about the adjacent node in the device discovery message into the management information, recorded by the UE, about the adjacent node.

In an embodiment, the step of sending the identity of the adjacent node and the power information about the adjacent node to the base station may include at least one of the following steps:

the UE sends a Mesh network access request to the base station, the Mesh network access request containing the identity of the adjacent node and the power information about the adjacent node; or

after accessing a Mesh network, the UE sends the identity of the adjacent node and the power information about the adjacent node to the base station.

In an embodiment, the Mesh network access request and/or the route searching request include a request sequence number, wherein the request sequence number of the Mesh network access request is used to allow the base station to distinguish whether the Mesh network access request of the UE is valid, and the request sequence number of the route searching request is used to allow the base station to distinguish whether the route searching request sent by the UE is valid.

In an embodiment, the step that the UE sends the identity of the adjacent node and the power information about the adjacent node to the base station after accessing a Mesh network may include:

the UE sends the identity of the adjacent node and the power information about the adjacent node to the base station in any one of the following manners:

manner 1: when it is detected that the change of power information about an adjacent node satisfies a pre-set value condition, the UE sends an identity and power information of the adjacent node to the base station; and

manner 2: the UE periodically sends identity information and power information about each adjacent node of the UE to the base station.

There is provided a route searching method for a D2D wireless Mesh network, including:

after receiving a route searching request from a UE, a base station calculates route information for the UE according to an acquired identity of an adjacent node of the UE and power information about the adjacent node; and

the base station sends the route information to the UE.

In an embodiment, the route searching method may further include at least one of the following steps: the base station receives a Mesh network access request sent by the UE, the Mesh network access request including the identity of the adjacent node of the UE and the power information about the adjacent node; or

the base station receives the identity of the adjacent node of the UE and the power information about the adjacent node, sent by the UE accessing a Mesh network.

In an embodiment, the step that a base station calculates route information for the UE according to an acquired identity of an adjacent node of the UE and power information about the adjacent node may include:

the base station calculates a weight value of each inter-node link in a D2D Mesh network according to the acquired identity of the adjacent node of the UE and the power information about the adjacent node; and

the base station calculates route information for the UE according to the weight value of the link.

In an embodiment, the weight value of each inter-node link in the D2D Mesh network is obtained by:

$$w_{i,j} = \frac{1}{\alpha\, p_{cij} + (1-\alpha)\dfrac{T}{\Delta t}\left( p_{cij} - p_{pij} \right)}$$

where $w_{i,j}$ is representative of a weight value of a link between a UE i and a UE j in a D2D Mesh network, $\alpha$ is a weight of signal power received within a current period, $p_{cij}$ is signal power of a UE j received by a UE i within a current reporting period, $pp_{ij}$ is signal power of a UE j received by a UE i within a previous reporting period, T is a time length of a reporting period, and $\Delta t$ is a time difference between reporting time of $p_{cij}$ and reporting time of $p_{pij}$.

There is provided a route searching apparatus for a D2D wireless Mesh network, arranged on a UE, the apparatus including:

a first sending module arranged to send a route searching request to a base station; and

a first receiving module arranged to receive route information determined by the base station for the UE according to an identity of an adjacent node of the UE and power information about the adjacent node.

In an embodiment, the route searching apparatus may further include:

a first acquisition module arranged to acquire the identity of the adjacent node of the UE and the power information about the adjacent node,

wherein the first sending module may be further configured to send the identity of the adjacent node and the power information about the adjacent node to the base station.

In an embodiment, the first acquisition module includes:

a first receiving unit arranged to receive a device discovery message sent by the adjacent node, the device discovery message including the identity of the adjacent node and the power information about the adjacent node.

In an embodiment, the first acquisition module may further include: a first determination unit arranged to determine, according to the identity of the adjacent node, whether the adjacent node is in management information, recorded by the UE, about the adjacent node; and

a first processing unit arranged to, if the adjacent node is in the management information, recorded by the UE, about the adjacent node, update the power information about the adjacent node in the management information about the adjacent node according to the power information about the adjacent node in the device discovery message, and if the adjacent node is not in the management information, recorded by the UE, about the adjacent node, store the identity of the adjacent node and the power information about the adjacent node in the device discovery message into the management information, recorded by the UE, about the adjacent node.

In an embodiment, the first sending module includes at least one of:

a first sending unit arranged to send a Mesh network access request to the base station, the Mesh network access request containing the identity of the adjacent node and the power information about the adjacent node; or

a second sending unit arranged to, after the UE accesses a Mesh network, send the identity of the adjacent node and the power information about the adjacent node to the base station.

In an embodiment, the Mesh network access request and/or the route searching request include a request sequence number, wherein the request sequence number of the Mesh network access request is used to allow the base station to distinguish whether the Mesh network access request of the UE is valid, and the request sequence number of the route searching request is used to allow the base station to distinguish whether the route searching request sent by the UE is valid.

In an embodiment, the operation that the first sending module sends the identity of the adjacent node and the power information about the adjacent node to the base station after the UE accesses a Mesh network includes the operation as follows.

The identity of the adjacent node and the power information about the adjacent node are sent to the base station in any one of the following manners:

manner 1: when it is detected that the change of power information about an adjacent node satisfies a pre-set value condition, sending an identity and power information of the adjacent node of which the change of the power information satisfies the pre-set value condition to the base station; and

manner 2: periodically sending identity information and power information about each adjacent node of the UE to the base station.

A route searching apparatus for a D2D wireless Mesh network includes:

a calculation module arranged to, after receiving a route searching request from a UE, calculate route information for the UE according to an identity of an adjacent node of the UE and power information about the adjacent node; and

a second sending module arranged to send the route information to the UE.

In an embodiment, the route searching apparatus may further include:

a second acquisition module arranged to: receive a Mesh network access request sent by the UE, the Mesh network access request including the identity of the adjacent node of the UE and the power information about the adjacent node; and/or,

receive the identity of the adjacent node of the UE and the power information about the adjacent node, sent by the UE accessing a Mesh network.

In an embodiment, the calculation module includes:

a first calculation unit arranged to calculate a weight value of each inter-node link in a D2D Mesh network according to the acquired identity of the adjacent node of the UE and the power information about the adjacent node; and

a second calculation unit arranged to calculate route information for the UE according to the weight value of the link.

In an embodiment, the second calculation unit calculates the weight value of each inter-node link in the D2D Mesh network in the following manner:

$$w_{i,j} = \frac{1}{\alpha\, p_{cij} + (1-\alpha)\dfrac{T}{\Delta t}\left(p_{cij} - p_{pij}\right)}$$

where $w_{i,j}$ is representative of a weight value of a link between a UE i and a UE j in a D2D Mesh network, $\alpha$ is a weight of signal power received within a current period, $p_{cij}$ is signal power of a UE j received by a UE i within a current reporting period, $p_{cij}$ is signal power of a UE j received by a UE i within a previous reporting period, T is a time length of a reporting period, and $\Delta t$ is a time difference between reporting time of $p_{cij}$ and reporting time of $p_{pij}$.

A computer-readable storage medium stores a computer-executable instruction. The computer-executable instruction is used to execute the above-mentioned method.

In the embodiments of the disclosure, route information is determined for a UE by means of an adjacent node of the UE and power information about the adjacent node, a route may be determined according to channel capacity and UE mobility, the system capacity is improved, the stability of the route is increased, and routing overheads can be reduced. After the drawings and the detailed descriptions are read and understood, other aspects may be understood.

## BRIEF DESCRIPTION OF DRAWINGS

FIG. 1 is a flowchart of a route searching method for a D2D Mesh network according to an embodiment of the disclosure.

FIG. 2 is a flowchart of another route searching method for a D2D Mesh network according to an embodiment of the disclosure.

FIG. 3 is an application scenario diagram of a D2D Mesh network according to an embodiment of the disclosure.

FIG. 4a is an initial distribution diagram of a UE according to an embodiment of the disclosure.

FIG. 4b is a distribution diagram of route reselection of a UE as shown in FIG. 4a.

FIG. 5 is a comparison diagram of a spectrum utilization rate under different user number scenarios according to an embodiment of the disclosure.

FIG. 6 is a comparison diagram of a route reselection count under different user number scenarios according to an embodiment of the disclosure.

FIG. 7 is a comparison diagram of a spectrum utilization rate under different time parameters according to an embodiment of the disclosure.

FIG. 8 is a comparison diagram of a route reselection count under different time parameters according to an embodiment of the disclosure.

FIG. 9 is a structure diagram of a route searching apparatus for a D2D Mesh network according to an embodiment of the disclosure.

FIG. 10 is a structure diagram of another route searching apparatus for a D2D Mesh network according to an embodiment of the disclosure.

## DETAILED DESCRIPTION

It is important to note that the embodiments in the present application and the characteristics in the embodiments may be combined mutually under the condition of no conflicts.

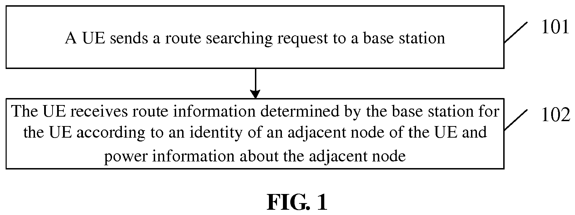

FIG. 1 is a flowchart of a route searching method for a D2D Mesh network according to an embodiment of the disclosure. The method as shown in FIG. 1 includes step 101 to step 102 as follows.

In step 101, a UE sends a route searching request to a base station.

In step 102, the UE receives route information determined by the base station for the UE according to an identity of an adjacent node of the UE and power information about the adjacent node.

According to the method provided in the embodiment of the disclosure, route information determined by a base station for a UE according to an identity of an adjacent node and power information about the adjacent node is received, a route may be determined according to channel capacity and UE mobility, the system capacity is improved, the stability of the route is increased, and routing overheads can be reduced.

Alternatively, the route searching method further includes step 100 as follows.

In step 100, the UE acquires the identity of the adjacent node of the UE and the power information about the adjacent node, and sends the identity of the adjacent node and the power information about the adjacent node to the base station.

Step 100 may be executed, but not limited to, ahead of step 101, an acquisition operation in step 100 may be executed ahead of step 101, and a sending operation and step 101 are executed concurrently. Other execution orders may be adopted as long as it is ensured that the base station has acquired the identity of the adjacent node of the UE and the power information about the adjacent node when determining the route information.

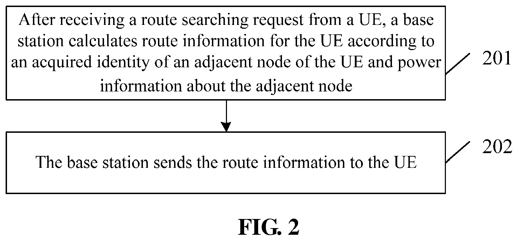

FIG. 2 is a flowchart of another route searching method for a D2D Mesh network according to an embodiment of the disclosure. The method as shown in FIG. 2 includes step 201 to step 202 as follows.

In step 201, after receiving a route searching request from a UE, a base station calculates route information for the UE according to an acquired identity of an adjacent node of the UE and power information about the adjacent node.

In step 202, the base station sends the route information to the UE.

According to the method provided in the embodiment of the disclosure, a base station determines route information according to an adjacent node of a UE and power information about the adjacent node, a route may be determined according to channel capacity and UE mobility, the system capacity is improved, the stability of the route is increased, and routing overheads can be reduced.

Firstly, the flow at a UE side (step 101 to 102) is illustrated as follows.

Herein, the step that the UE acquires the identity of the adjacent node of the UE and the power information about the adjacent node may include the sub-step as follows.

The UE receives a device discovery message sent by the adjacent node, wherein the device discovery message includes the identity of the adjacent node and the power information about the adjacent node.

Herein, the step that the UE acquires the identity of the adjacent node of the UE and the power information about the adjacent node may further include the sub-steps as follows.

The UE determines, according to the identity of the adjacent node, whether the adjacent node is in management information, recorded by the UE, about the adjacent node.

If the adjacent node is in the management information, recorded by the UE, about the adjacent node, the UE updates the power information about the adjacent node in the management information about the adjacent node according to the power information about the adjacent node in the device discovery message; and if the adjacent node is not in the management information, recorded by the UE, about the adjacent node, the UE stores the identity of the adjacent node and the power information about the adjacent node in the device discovery message into the management information, recorded by the UE, about the adjacent node.

Herein, a device discovery process is similar to a D2D device discovery process in the related art, and is implemented in a form of broadcasting, by a UE, a discovery signal and returning, by other UEs, ACK signals. The related art may be followed, and the compatibility is better.

Herein, the step of sending the identity of the adjacent node and the power information about the adjacent node to the base station may include at least one of the sub-steps as follows.

The UE sends a Mesh network access request to the base station, the Mesh network access request containing the identity of the adjacent node and the power information about the adjacent node. Or,

After accessing a Mesh network, the UE sends the identity of the adjacent node and the power information about the adjacent node to the base station.

Herein, the situation that the UE sends the identity of the adjacent node and the power information after accessing a Mesh network includes at least one of the following:

(1) after accessing a Mesh network, the UE resends the identity of the adjacent node and the power information to the base station as required; and

(2) before sending the identity of the adjacent node and the power information, the UE may send a Mesh network access request, after access allowance is determined, the UE sends the identity of the adjacent node and the power information, and if access is not allowed, the UE does not send the identity of the adjacent node and the power information, so that it can be ensured that the identity of the adjacent node and the power information is sent only when access is allowed, thereby ensuring the validity of transmitted data, reducing transmission of invalid data, and achieving the aim of fully utilizing bandwidth resources.

Herein, the Mesh network access request and/or the route searching request include a request sequence number, wherein the request sequence number of the Mesh network access request is used to allow the base station to distinguish whether the Mesh network access request of the UE is valid, and the request sequence number of the route searching request is used to allow the base station to distinguish whether the route searching request sent by the UE is valid.

Herein, the Mesh network access request may include an ID, a request sequence number and an adjacent node list of the UE. Because the Mesh network access request sent to the base station by the UE may expire due to blockage caused by delay, when the Mesh network access request expires, the UE will initiate a Mesh network access request again, and the base station may distinguish an invalid Mesh network access request by means of the size of a request sequence number of a Mesh network access request. The UE may also periodically report change information about the adjacent node after accessing the Mesh network.

Herein, when a UE needs to communicate with another UE, the UE may send a route searching request to a base station. The route searching request may include: a target UE ID, a request sequence number, a Quality of Service (QoS) parameter and a transmission data volume. Because the route searching request sent to the base station by the UE may expire due to blockage caused by delay, when the route searching request expires, the UE will initiate a route searching request again, and the base station distinguishes an invalid route searching request by means of the size of the request sequence number of the route searching request.

Herein, the step that the UE sends the identity of the adjacent node and the power information about the adjacent node to the base station after accessing a Mesh network may include the sub-step as follows.

The UE sends the identity of the adjacent node and the power information about the adjacent node to the base station in any one of the following manners:

manner 1: when it is detected that the change of power information about an adjacent node satisfies a pre-set value condition, the UE sends an identity and power information of the adjacent node of which the change of the power information satisfies the pre-set value condition to the base station; and

manner 2: the UE periodically sends identity information and power information about each adjacent node of the UE to the base station.

Herein, there are two manners of reporting power information after the UE accesses the Mesh network. The first manner is an event triggered reporting manner in which incremental reporting is performed when it is detected that power information about an adjacent node is greatly changed (namely the change of the power information satisfies a pre-set value condition) and only the identity and power information of this node are reported. The second manner is a periodic reporting manner in which full reporting needs to be performed within each period, namely the identity and power information of each adjacent node are reported.

Then, the flow at a base station side (step 201 to 202) is illustrated as follows.

Herein, the flow at a base station side may further include at least one of the following steps:

the base station receives a Mesh network access request sent by the UE, the Mesh network access request including the identity of the adjacent node of the UE and the power information about the adjacent node; or

the base station receives the identity of the adjacent node of the UE and the power information about the adjacent node, sent by the UE accessing a Mesh network.

Herein, the situation that the base station receives the identity of the adjacent node of the UE and the power information about the adjacent node, sent by the UE accessing a Mesh network includes at least one of the following:

(1) the base station receives an updated identity and power information of the adjacent node, sent after the UE accesses the Mesh network; and

(2) after access of the UE is allowed, the base station receives the identity and power information of the adjacent node, sent by the UE, and when access of the UE is not allowed, the base station cannot receive the identity and power information of the adjacent node, sent by the UE, so that it can be ensured that the identity and power information of the adjacent node of the UE will be received only when access of the UE is allowed, thereby ensuring the validity of transmitted data, reducing transmission of invalid data, and achieving the aim of fully utilizing bandwidth resources.

Herein, the step that a base station calculates route information for the UE according to an acquired identity of an adjacent node of the UE and power information about the adjacent node may include the sub-steps as follows.

The base station calculates a weight value of each inter-node link in a D2D Mesh network according to the acquired identity of the adjacent node of the UE and the power information about the adjacent node.

The base station calculates route information for the UE according to the weight value of the link.

Herein, the weight value of each inter-node link in the D2D Mesh network is obtained in the following manner:

$$w_{i,j} = \frac{1}{\alpha \, p_{cij} + (1-\alpha)\dfrac{T}{\Delta t}\left(p_{cij} - p_{pij}\right)}$$

where $w_{i,j}$ is representative of a weight value of a link between a UE i and a UE j in a D2D Mesh network, $\alpha$ is a weight of signal power received within a current period, $p_{cij}$ is signal power of a UE j received by a UE i within a current reporting period, $p_{pij}$ is signal power of a UE j received by a UE i within a previous reporting period, T is a time length of a reporting period, and $\Delta t$ is a time difference between reporting time of $p_{cij}$ and reporting time of $p_{pij}$.

Herein, because a D2D Mesh network reuses cellular uplink resources, a radio channel is relatively complex, and channel capacity depends on bandwidth and signal-to-noise ratio. Under the condition of a certain bandwidth, the channel capacity depends on the signal-to-noise ratio. In order to increase the validity of transmission, it is necessary to select a device with large receiving power to serve as a route. In addition, the receiving power of the device reflects a distance between devices to a certain extent. Therefore, in a mobility-sensitive D2D Mesh network, the change of the receiving power may reflect a relative motion between two devices. When the receiving power is small, two devices are distant from each other, and when the change amplitude is large, the two devices are quickly distant from each other.

In view of the above two aspects, the following link weighting method is provided:

$$w_{i,j} = \frac{1}{\alpha \, p_{cij} + (1-\alpha)\dfrac{T}{\Delta t}\left(p_{cij} - p_{pij}\right)} \qquad (1)$$

In the above formula, $\alpha$ is a weight of signal power received within a current period, and may be determined according to an experience value or an experiment; as $\alpha$ is larger, the signal power received within a current period accounts for a larger proportion in a weight value, and the mobility accounts for a smaller proportion; and $p_{cij}$ is signal power of a UE j received by a UE i within a current reporting period, $p_{pij}$ is signal power of a UE j received by a UE i within a previous reporting period, T is a time length of a reporting period, $\Delta t$ is a time difference between reporting time of $p_{cij}$ and reporting time of $p_{cij}$, and $\dfrac{1}{\Delta t}\left(p_{cij} - p_{pij}\right)$ is representative of a change speed of the receiving power. It can be seen that the UE is more suitable for serving as a route as the weight value is smaller.

The base station may calculate the weight value of each link in this manner. Because the UE is more suitable for serving as a route as the weight value is smaller, a route problem may be abstracted as a graph theoretic shortest route problem as follows.

The D2D Mesh network is regarded as graph $G(V,E)$, $V$ is representative of a set of all nodes (namely UE) in the D2D Mesh network, $E$ is representative of a set of all links in the D2D Mesh network, and if a node $u$ and a node $v$ are adjacent and have a link $(u,v)$, $(u,v) \in E$. It is supposed that the cost of the link $(u,v)$ is represented by $d_{uv}$, and $D_v$ is a shortest route of a node $v$ reaching a certain destination node. The route problem is that a shortest route of a node reaching a destination node is searched by means of the following formula:

$$D_u = \min\left[d_{uv} + D_v\right] \qquad (2)$$

It refers to searching an optimum adjacent node and achieving a shortest route of the adjacent node reaching a destination node, and the cost here is a weight value of a link. Route calculation may be implemented by means of shortest route algorithms including, but not limited to, a Dijkstra algorithm. There may be many shortest route algorithms. That is also expansibility of a protocol, different shortest route algorithms are adopted according to a QoS parameter, and the efficiency may be higher.

In an example, the method provided in the embodiment of the disclosure includes the steps as follows.

In the first step, a UE performs device discovery to generate an adjacent node list.

In the second step, the UE sends a Mesh network access request to a base station, the Mesh network access request containing an identity of an adjacent node and power information about the adjacent node. The base station returns ACK to the UE, and then the UE accesses a Mesh network. After access, the UE may also report power information change information to the base station. There are two reporting manners. The first manner is an event triggered reporting manner in which incremental reporting is performed when it is detected that power information about an adjacent node is greatly changed and only the ID and power information of this node are reported. The second manner is a periodic reporting manner in which full reporting needs to be performed within each period.

In the third step, the UE sends a route searching request to the base station.

In the fourth step, the base station searches an optimum route by means of a routing algorithm. In the fifth step, the base station issues route information to the UE.

A calculation process of the base station is as follows.

The base station may obtain, by means of the identity and power information of the adjacent node, obtained in the second step, a topological graph of a network, and the size of receiving power of different UEs, and a weight value of each link may be calculated based on the size of the receiving power.

Here, the embodiment of the disclosure provides a new route measuring method.

Because a D2D Mesh network reuses cellular uplink resources, a radio channel is relatively complex, and channel capacity depends on bandwidth and signal-to-noise ratio. Under the condition of a certain bandwidth, the channel capacity depends on the signal-to-noise ratio. In order to increase the validity of transmission, it is necessary to select a device with large receiving power to serve as a route. In addition, the receiving power of the device reflects a distance between devices to a certain extent. Therefore, in a mobility-sensitive D2D Mesh network, the change of the receiving power may reflect a relative motion between two devices. When the receiving power is small, two devices are distant from each other, and when the change amplitude is large, the two devices are quickly distant from each other.

In view of the above two aspects, the following link weight calculation manner is provided:

$$w_{i,j} = \frac{1}{\alpha\, p_{cij} + (1-\alpha)\dfrac{T}{\Delta t}\left(p_{cij} - p_{pij}\right)} \qquad (3)$$

In the above formula, $\alpha$ is a weight of signal power received within a current period, and may be determined according to an experience value or an experiment; as $\alpha$ is larger, the signal power received within a current period accounts for a larger proportion in a weight value, and the mobility accounts for a smaller proportion; and $p_{cij}$ is signal power of a UE j received by a UE i within a current reporting period, $p_{pij}$ is signal power of a UE j received by a UE i within a previous reporting period, T is a time length of a reporting period, $\Delta t$ is a time difference between reporting time of $p_{cij}$ and reporting time of $p_{pij}$, and $\frac{1}{\Delta t}\left(p_{cij} - p_{pij}\right)$ is representative of a change speed of the receiving power. It can be seen that the UE is more suitable for serving as a route as the weight value is smaller.

The base station may calculate the weight value of each link in this manner. Because the UE is more suitable for serving as a route as the weight value is smaller, route calculation may be implemented by means of shortest route algorithms. There may be many shortest route algorithms. That is also expansibility of a protocol, different shortest route algorithms are adopted according to different QoS demands, and the efficiency may be higher.

Description will be made below in conjunction with a view and a simulation situation of the embodiment.

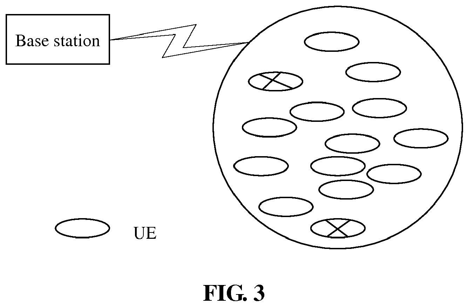

Referring to FIG. 3, a research scenario of the embodiment of the disclosure is introduced. Multiple D2D UEs are contained in a cellular network, and the D2D UEs reuse uplink resources of the cellular network. In a simulation scenario, Table 1 provides parameter settings of an experiment simulation of the embodiment of the disclosure.

Table 1 Simulation parameter setting

| | |
|---|---|
| Number of base stations | 1 |
| System range | 50 m*50 m |
| D2D communication distance | 0 m-30 m |
| System resource | uplink |
| Bandwidth | 10 MHz |
| UE transmitting power information | 20 dBm |
| Central frequency | 2 GHz |
| Number of D2D UEs | 10-60 |
| Scattering mode | Uniform scattering |
| Heat noise power information spectrum density | -174 dBm/Hz |
| Path gain $h_{ij}$ | Path gain between D2D UEs: $PL_{DU} = 16.9\, log_{10}(d[\text{m}]) + 46.8 + 20\, log_{10}(f_c[\text{GHz}]/5.0)$ |

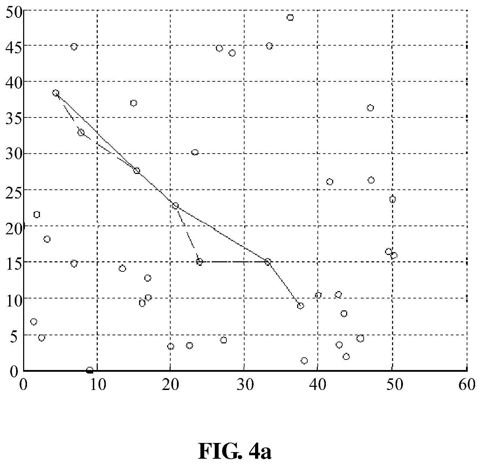

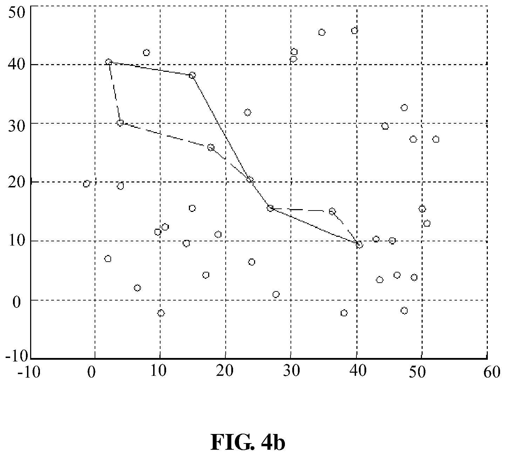

Referring to FIG. 4, FIG. 4a and FIG. 4b are an initial distribution diagram of a UE and a distribution diagram of route reselection. Circles are representative of D2D UEs. Solid line paths and dotted line paths are representative of Dynamic Source Routing (DSR) and a route selected in the embodiment of the disclosure. A distance is mainly considered during route selection of DSR, and a factor of mobility is omitted. Therefore, a selected route is not stable enough, and a route needs to be reselected within a short time. In this example, the route selected by DSR after 5s fails, and the route selected in the embodiment of the disclosure is valid all the time.

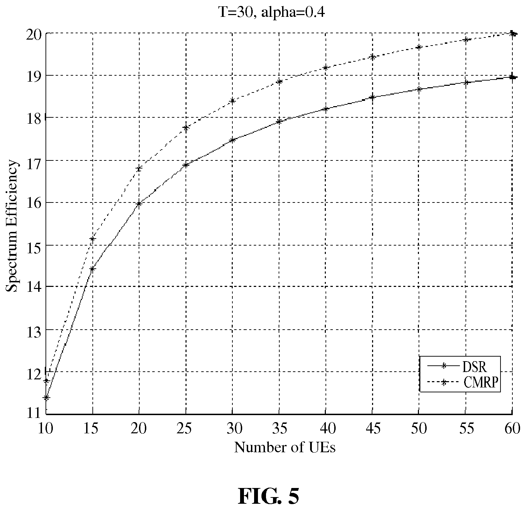

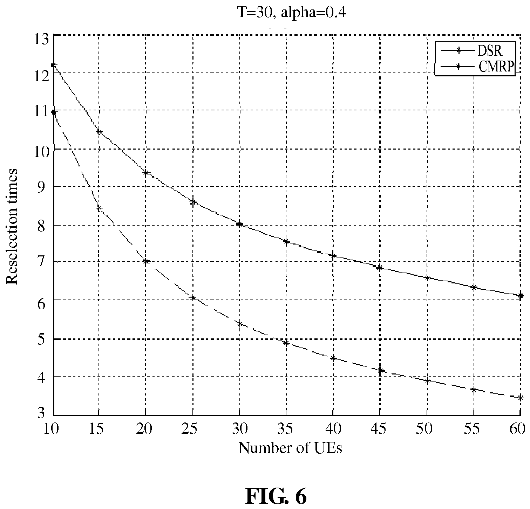

Referring to FIG. 5 and FIG. 6, FIG. 5 shows change of a spectrum utilization rate of a system when the number of D2D UEs is changed. FIG. 6 shows change of a route reselection count when the number of D2D UEs is changed. It can be seen that when the number of UEs is increased, the number of UEs in an area is increased, the density is higher, the spectrum utilization rate is increased, and the possibility of route reselection is reduced.

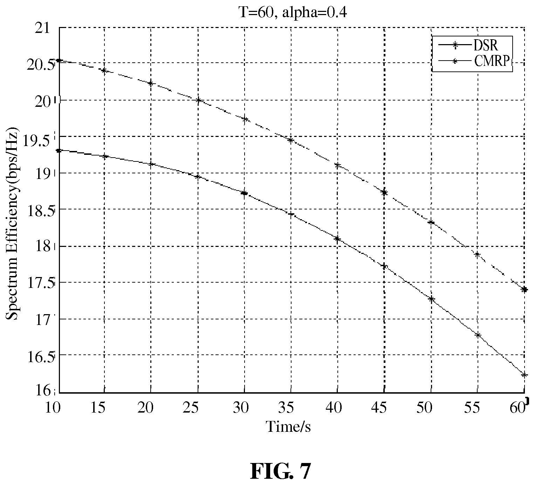

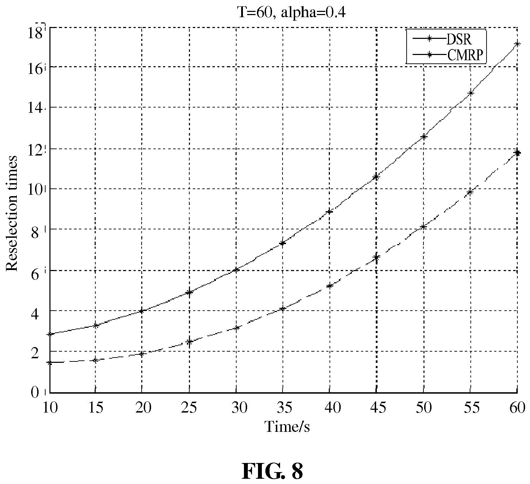

Referring to FIG. 7 and FIG. 8, FIG. 7 shows change of a spectrum utilization rate during time variation. FIG. 8 shows change of a route reselection count during time variation. It can be seen that when time is prolonged, points are gradually scattered, and therefore the spectrum utilization rate is gradually reduced whilst the route reselection count is gradually increased.

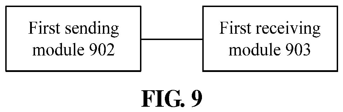

FIG. 9 is a structure diagram of a route searching apparatus for a D2D Mesh network according to an embodiment of the disclosure. The apparatus as shown in FIG. 9 is arranged on a UE and includes:

> a first sending module 902 arranged to send a route searching request to a base station, and send an identity of an adjacent node of the UE and power information about the adjacent node; and
> a first receiving module 903 arranged to receive route information determined by the base station for the UE according to the identity of the adjacent node of the UE and the power information about the adjacent node.

Herein, the apparatus may further include:

> a first acquisition module arranged to acquire the identity of the adjacent node of the UE and the power information about the adjacent node,
> wherein the first sending module may be further configured to send the identity of the adjacent node and the power information about the adjacent node to the base station.

Herein, the first acquisition module may include:
a first receiving unit arranged to receive a device discovery message sent by the adjacent node, the device discovery message including the identity of the adjacent node and the power information about the adjacent node.

Herein, the first acquisition module may further include:

> a first determination unit arranged to determine, according to the identity of the adjacent node, whether the adjacent node is in management information, recorded by the UE, about the adjacent node; and
> a first processing unit arranged to, if the adjacent node is in the management information, recorded by the UE, about the adjacent node, update the power information about the adjacent node in the management information about the adjacent node according to the power information about the adjacent node in the device discovery message, and if the adjacent node is not in the management information, recorded by the UE, about the adjacent node, store the identity of the adjacent node and the power information about the adjacent node in the device discovery message into the management information, recorded by the UE, about the adjacent node.

Herein, the first sending module may include at least one of:

> a first sending unit arranged to send a Mesh network access request to the base station, the Mesh network access request containing the identity of the adjacent node and the power information about the adjacent node; or
> a second sending unit arranged to, after the UE accesses a Mesh network, send the identity of the adjacent node and the power information about the adjacent node to the base station.

Herein, the Mesh network access request and/or the route searching request may include a request sequence number, wherein the request sequence number of the Mesh network access request is used to allow the base station to distinguish whether the Mesh network access request of the UE is valid, and the request sequence number of the route searching request is used to allow the base station to distinguish whether the route searching request sent by the UE is valid.

Herein, the operation that the first sending module sends the identity of the adjacent node and the power information about the adjacent node to the base station after the UE accesses a Mesh network includes the operation as follows.

The identity of the adjacent node and the power information about the adjacent node are sent to the base station in any one of the following manners:

manner 1: when it is detected that the change of power information about an adjacent node satisfies a pre-set value condition, sending an identity and power information of the adjacent node of which the change of the power information satisfies the pre-set value condition to the base station; and

manner 2: periodically sending identity information and power information about each adjacent node of the UE to the base station.

According to the apparatus provided in the embodiment of the disclosure, route information is determined by means of an adjacent node and power information about the adjacent node, a route may be determined according to channel capacity and UE mobility, the system capacity is improved, the stability of the route is increased, and routing overheads can be reduced.

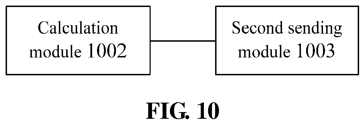

FIG. 10 is a structure diagram of another route searching apparatus for a D2D Mesh network according to an embodiment of the disclosure. The apparatus as shown in FIG. 10 includes:

a calculation module 1002 arranged to, after receiving a route searching request from a UE, calculate route information for the UE according to an identity of an adjacent node of the UE and power information about the adjacent node; and

a second sending module 1003 arranged to send the route information to the UE.

Herein, the apparatus may further include:

a second acquisition module arranged to: receive a Mesh network access request sent by the UE, the Mesh network access request including the identity of the adjacent node of the UE and the power information about the adjacent node; and/or,

receive the identity of the adjacent node of the UE and the power information about the adjacent node, sent by the UE accessing a Mesh network.

Herein, the calculation module may include:

a first calculation unit arranged to calculate a weight value of each inter-node link in a D2D Mesh network according to the acquired identity of the adjacent node of the UE and the power information about the adjacent node; and

a second calculation unit arranged to calculate route information for the UE according to the weight value of the link.

Herein, the second calculation unit may calculate the weight value of each inter-node link in the D2D Mesh network in the following manner:

$$w_{i,j} = \frac{1}{\alpha\, p_{cij} + (1-\alpha)\dfrac{T}{\Delta t}\left(p_{cij} - p_{pij}\right)}$$

where $w_{i,j}$ is representative of a weight value of a link between a UE i and a UE j in a D2D Mesh network, $\alpha$ is a weight of signal power received within a current period, $p_{cij}$ is signal power of a UE j received by a UE i within a current reporting period, $p_{pij}$ is signal power of a UE j received by a UE i within a previous reporting period, T is a time length of a reporting period, and $\Delta t$ is a time difference between reporting time of $p_{cij}$ and reporting time of $p_{pij}$.

According to the apparatus provided in the embodiment of the disclosure, route information is determined by means of an adjacent node and power information about the adjacent node, a route may be determined according to channel capacity and UE mobility, the system capacity is improved, the stability of the route is increased, and routing overheads can be reduced.

The embodiment of the disclosure also provides a computer-readable storage medium, which stores a computer-executable instruction. The computer-executable instruction is used to execute the above-mentioned method.

Those of ordinary skill in the art may understand that all or some of the steps in the above-mentioned embodiment may be implemented by using a computer program flow. The computer program may be stored in a computer-readable storage medium. The computer program is executed on a corresponding hardware platform (such as system, device, apparatus and instrument). During execution, the computer program includes one of the steps of the method embodiment or a combination thereof.

Alternatively, all or some of the steps in the above-mentioned embodiment may also be implemented by using an integrated circuit. These steps may be manufactured into integrated circuit modules respectively, or multiple modules or steps therein are manufactured into a single integrated circuit module. Thus, the embodiment of the disclosure is not limited to combination of any specific hardware and software.

The apparatus/function module/function unit in the above-mentioned embodiment may be implemented by using a general computation apparatus. They may be centralized on a single computation apparatus or may be distributed on a network composed of multiple computation apparatuses.

When being implemented in a form of software function module and sold or used as an independent product, the apparatus/function module/function unit in the above-mentioned embodiment may be stored in a computer-readable storage medium. The above-mentioned computer-readable storage medium may be a read-only memory, a magnetic disk or an optical disk.

**INDUSTRIAL APPLICABILITY**

In the embodiment of the disclosure, route information is determined for a UE by means of an adjacent node of the UE and power information about the adjacent node, a route may be determined according to channel capacity and UE mobility, the system capacity is improved, the stability of the route is increased, and routing overheads can be reduced.

**Claims**

1. A route searching method for a Device to Device (D2D) wireless Mesh network, comprising:

   sending, by a User Equipment (UE), a route searching request to a base station; and
   receiving, by the UE, route information determined by the base station for the UE according to an identity of an adjacent node of the UE and power information about the adjacent node.

2. The route searching method according to claim 1, further comprising:
   acquiring, by the UE, the identity of the adjacent node of the UE and the power information about the adjacent node, and sending the identity of the adjacent node and the power information about the adjacent node to the base station.

3. The route searching method according to claim 2, wherein acquiring, by the UE, the identity of the adjacent node of the UE and the power information about the adjacent node comprises:
   receiving, by the UE, a device discovery message sent by the adjacent node, the device discovery message comprising the identity of the adjacent node and the power information about the adjacent node.

4. The route searching method according to claim 3, wherein acquiring, by the UE, the identity of the adjacent node of the UE and the power information about the adjacent node further comprises:

   determining, by the UE, whether the adjacent node is in management information, recorded by the UE, about the adjacent node according to the identity of the adjacent node; and
   if the adjacent node is in the management information, recorded by the UE, about the adjacent node, updating, by the UE, the power information about the adjacent node in the management information about the adjacent node according to the power information about the adjacent node in the device discovery message, and if the adjacent node is not in the management information, recorded by the UE, about the adjacent node, storing, by the UE, the identity of the adjacent node and the power information about the adjacent node in the device discovery message into the management information, recorded by the UE, about the adjacent node.

5. The route searching method according to claim 2, wherein sending the identity of the adjacent node and the power information about the adjacent node to the base station comprises at least one of the following steps:

   sending, by the UE, a Mesh network access request to the base station, the Mesh network access request containing the identity of the adjacent node and the power information about the adjacent node; or
   sending, by the UE, the identity of the adjacent node and the power information about the adjacent node to the base station after accessing a Mesh network.

6. The route searching method according to claim 5, wherein the Mesh network access request and/or a route searching request comprise a request sequence number, the request sequence number of the Mesh network access request being used to allow the base station to distinguish whether the Mesh network access request of the UE is valid, and the request sequence number of the route searching request being used to allow the base station to distinguish whether the route searching request sent by the UE is valid.

7. The route searching method according to claim 5, wherein sending, by the UE, the identity of the adjacent node and the power information about the adjacent node to the base station after accessing the Mesh network comprises: sending the identity of the adjacent node and the power information about the adjacent node to the base station in any one of the following manners:

manner 1: when it is detected that a change of power information about an adjacent node satisfies a pre-set value condition, sending, by the UE, an identity and power information of the adjacent node to the base station; and
manner 2: periodically sending identity information and power information about each adjacent node of the UE to the base station.

8. A route searching method for a Device to Device (D2D) wireless Mesh network, comprising:

after receiving a route searching request from a User Equipment (UE), calculating, by a base station, route information for the UE according to an acquired identity of an adjacent node of the UE and power information about the adjacent node; and
sending, by the base station, the route information to the UE.

9. The route searching method according to claim 8, further comprising at least one of the following steps:

receiving, by the base station, a Mesh network access request sent by the UE, the Mesh network access request comprising the identity of the adjacent node of the UE and the power information about the adjacent node; or
receiving, by the base station, the identity of the adjacent node of the UE and the power information about the adjacent node, sent by the UE accessing a Mesh network.

10. The route searching method according to claim 8, wherein calculating, by the base station, the route information for the UE according to the acquired identity of the adjacent node of the UE and the power information about the adjacent node comprises:

calculating, by the base station, a weight value of each inter-node link in a D2D Mesh network according to the acquired identity of the adjacent node of the UE and the power information about the adjacent node; and
calculating, by the base station, route information for the UE according to the weight value of the link.

11. The route searching method according to claim 10, wherein the weight value of each inter-node link in the D2D Mesh network is obtained by:

$$w_{i,j} = \frac{1}{\alpha\, p_{cij} + (1-\alpha)\dfrac{T}{\Delta t}\big(p_{cij} - p_{pij}\big)}$$

where $w_{i,j}$ is representative of a weight value of a link between a UE i and a UE j in a D2D Mesh network, $\alpha$ is a weight of signal power received within a current period, $p_{cij}$ is signal power of a UE j received by a UE i within a current reporting period, $p_{pij}$ is signal power of a UE j received by a UE i within a previous reporting period, T is a time length of a reporting period, and $\Delta t$ is a time difference between reporting time of $p_{cij}$ and reporting time of $p_{pij}$.

12. A route searching apparatus for a Device to Device (D2D) wireless Mesh network, arranged on a User Equipment (UE), the apparatus comprising:

a first sending module arranged to send a route searching request to a base station; and
a first receiving module arranged to receive route information determined by the base station for the UE according to an identity of an adjacent node of the UE and power information about the adjacent node.

**13.** The route searching apparatus according to claim 12, further comprising:

a first acquisition module arranged to acquire the identity of the adjacent node of the UE and the power information about the adjacent node,
wherein the first sending module is further configured to send the identity of the adjacent node and the power information about the adjacent node to the base station.

**14.** The route searching apparatus according to claim 13, wherein the first acquisition module comprises:
a first receiving unit arranged to receive a device discovery message sent by the adjacent node, the device discovery message comprising the identity of the adjacent node and the power information about the adjacent node.

**15.** The route searching apparatus according to claim 14, wherein the first acquisition module further comprises: a first determination unit arranged to determine, according to the identity of the adjacent node, whether the adjacent node is in management information, recorded by the UE, about the adjacent node; and
a first processing unit arranged to, if the adjacent node is in the management information, recorded by the UE, about the adjacent node, update the power information about the adjacent node in the management information about the adjacent node according to the power information about the adjacent node in the device discovery message, and if the adjacent node is not in the management information, recorded by the UE, about the adjacent node, store the identity of the adjacent node and the power information about the adjacent node in the device discovery message into the management information, recorded by the UE, about the adjacent node.

**16.** The route searching apparatus according to claim 13, wherein the first sending module comprises at least one of:

a first sending unit arranged to send a Mesh network access request to the base station, the Mesh network access request containing the identity of the adjacent node and the power information about the adjacent node; or
a second sending unit arranged to, after the UE accesses a Mesh network, send the identity of the adjacent node and the power information about the adjacent node to the base station.

**17.** The route searching apparatus according to claim 16, wherein the Mesh network access request and/or the route searching request comprise a request sequence number, the request sequence number of the Mesh network access request being used to allow the base station to distinguish whether the Mesh network access request of the UE is valid, and the request sequence number of the route searching request being used to allow the base station to distinguish whether the route searching request sent by the UE is valid.

**18.** The route searching apparatus according to claim 16, wherein the operation that the first sending module sends the identity of the adjacent node and the power information about the adjacent node to the base station after the UE accesses a Mesh network comprises:
sending the identity of the adjacent node and the power information about the adjacent node to the base station in any one of the following manners:

manner 1: when it is detected that a change of power information about an adjacent node satisfies a pre-set value condition, sending an identity and power information of the adjacent node to the base station; and
manner 2: periodically sending identity information and power information about each adjacent node of the UE to the base station.

**19.** A route searching apparatus for a Device to Device (D2D) wireless Mesh network, comprising:

a calculation module arranged to, after receiving a route searching request from a User Equipment (UE), calculate route information for the UE according to an identity of an adjacent node of the UE and power information about the adjacent node; and
a second sending module arranged to send the route information to the UE.

**20.** The route searching apparatus according to claim 19, further comprising:

a second acquisition module arranged to: receive a Mesh network access request sent by the UE, the Mesh network access request comprising the identity of the adjacent node of the UE and the power information about the adjacent node; and/or,
receive the identity of the adjacent node of the UE and the power information about the adjacent node, sent by the UE accessing a Mesh network.

21. The route searching apparatus according to claim 19, wherein the calculation module comprises:

a first calculation unit arranged to calculate a weight value of each inter-node link in a D2D Mesh network according to the acquired identity of the adjacent node of the UE and the power information about the adjacent node; and
a second calculation unit arranged to calculate route information for the UE according to the weight value of the link.

22. The route searching apparatus according to claim 21, wherein the second calculation unit calculates the weight value of each inter-node link in the D2D Mesh network by:

$$w_{i,j} = \frac{1}{\alpha\, p_{cij} + (1-\alpha)\dfrac{T}{\Delta t}\left(p_{cij} - p_{pij}\right)}$$

where $w_{i,j}$ is representative of a weight value of a link between a UE i and a UE j in a D2D Mesh network, $\alpha$ is a weight of signal power received within a current period, $p_{cij}$ is signal power of a UE j received by a UE i within a current reporting period, $p_{pij}$ is signal power of a UE j received by a UE i within a previous reporting period, T is a time length of a reporting period, and $\Delta t$ is a time difference between reporting time of $p_{cij}$ and reporting time of $p_{pij}$.

| A UE sends a route searching request to a base station | 101 |

↓

| The UE receives route information determined by the base station for the UE according to an identity of an adjacent node of the UE and power information about the adjacent node | 102 |

**FIG. 1**

After receiving a route searching request from a UE, a base station calculates route information for the UE according to an acquired identity of an adjacent node of the UE and power information about the adjacent node — 201

The base station sends the route information to the UE — 202

**FIG. 2**

EP 3 337 241 A1

**FIG. 3**

**FIG. 4a**

**FIG. 4b**

T=30, alpha=0.4

**FIG. 5**

T=30, alpha=0.4

FIG. 6

FIG. 7

**FIG. 8**

| First sending module 902 | First receiving module 903 |

**FIG. 9**

| Calculation module 1002 | Second sending module 1003 |

**FIG. 10**

## INTERNATIONAL SEARCH REPORT

| International application No. |
| --- |
| **PCT/CN2016/092366** |

### A. CLASSIFICATION OF SUBJECT MATTER

H04W 40/02 (2009.01) i

According to International Patent Classification (IPC) or to both national classification and IPC

### B. FIELDS SEARCHED

Minimum documentation searched (classification system followed by classification symbols)

H04W, H04B

Documentation searched other than minimum documentation to the extent that such documents are included in the fields searched

Electronic data base consulted during the international search (name of data base and, where practicable, search terms used)

USTXT; CNTXT; CNABS; CNKI; VEN: D2D grid, ID; neighbor node, power, device to device, mesh, identity/identification, route, weight

### C. DOCUMENTS CONSIDERED TO BE RELEVANT

| Category* | Citation of document, with indication, where appropriate, of the relevant passages | Relevant to claim No. |
| --- | --- | --- |
| X | CN 101043236 B (HUAWEI TECHNOLOGIES CO., LTD.), 12 May 2010 (12.05.2010), description, paragraphs 13-46 | 1-9, 12-20 |
| Y | CN 101043236 A (HUAWEI TECHNOLOGIES CO., LTD.), 26 September 2007 (26.09.2007), description, paragraphs 13-46 | 10, 11, 21, 22 |
| Y | CN 101895482 A (HUAWEI TECHNOLOGIES CO., LTD.), 24 November 2010 (24.11.2010), description, paragraphs 62-76 | 10, 11, 21, 22 |
| A | CN 104581864 A (XI'AN JIAOTONG UNIVERSITY), 29 April 2015 (29.04.2015), the whole document | 1-22 |
| A | CN 104320811 A (NANJING UNIVERSITY OF POSTS AND TELECOMMUNICATIONS), 28 January 2015 (28.01.2015), the whole document | 1-22 |
| A | CN 104394569 A (XI'AN JIAOTONG UNIVERSITY), 04 March 2015 (04.03.2015), the whole document | 1-22 |

| ☐ Further documents are listed in the continuation of Box C. | ☒ See patent family annex. |
| --- | --- |

| \* Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 September 2016 (23.09.2016) | **25 October 2016 (25.10.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Jia** Telephone No.: (86-10) **62412046** |
| --- | --- |

Form PCT/ISA/210 (second sheet) (July 2009)

## INTERNATIONAL SEARCH REPORT
### Information on patent family members

International application No.

**PCT/CN2016/092366**

| Patent Documents referred in the Report | Publication Date | Patent Family | Publication Date |
|---|---|---|---|
| CN 101043236 B | 12 May 2010 | CN 101043236 A | 26 September 2007 |
| CN 101895482 A | 24 November 2010 | WO 2010133114 A1 | 25 November 2010 |
| | | EP 2429122 B1 | 05 March 2014 |
| | | US 2012066368 A1 | 15 March 2012 |
| | | EP 2429122 A1 | 14 March 2012 |
| | | CA 2762367 C | 15 December 2015 |
| | | US 8914487 B2 | 16 December 2014 |
| | | CA 2762367 A1 | 25 November 2010 |
| | | EP 2429122 A4 | 30 May 2012 |
| CN 104581864 A | 29 April 2015 | None | |
| CN 104320811 A | 28 January 2015 | None | |
| CN 104394569 A | 04 March 2015 | None | |

Form PCT/ISA/210 (patent family annex) (July 2009)